# EUROPÄISCHE PATENTSCHRIFT

(11) **EP 2 724 233 B1**
(45) Veröffentlichungstag und Bekanntmachung des Hinweises auf die Patenterteilung: **14.12.2016**
(21) Anmeldenummer: 12759066.9
(22) Anmeldetag: 03.09.2012
(51) Int. Cl.: H04L 12/707, G06F 11/16, H04L 12/40, G06F 11/20

(54) **VERFAHREN ZUM BETREIBEN EINES KOMMUNIKATIONSNETZWERKES UND NETZWERKANORDNUNG**
METHOD FOR OPERATING A COMMUNICATION NETWORK, AND NETWORK ARRANGEMENT
PROCÉDÉ DE FONCTIONNEMENT D'UN RÉSEAU DE COMMUNICATION ET DISPOSITIF DE RÉSEAU

(30) Priorität: 19.09.2011 DE 102011082969
(43) Veröffentlichungstag der Anmeldung: 30.04.2014
(73) Patentinhaber: Siemens Aktiengesellschaft, 80333 München (DE)
(72) Erfinder: ARMBRUSTER, Michael, 81825 München (DE); FIEGE, Ludger, 85567 Grafing (DE); RIEDL, Johannes, 84030 Ergolding (DE); SCHMID, Thomas, 72622 Nürtingen (DE); ZIRKLER, Andreas, 81671 München (DE)
(86) Internationale Anmeldenummer: PCT/EP2012/067110
(87) Internationale Veröffentlichungsnummer: WO 2013/041351

(56) Entgegenhaltungen:
- WO-A1-2004/029737
- WO-A1-2009/098616

## Beschreibung

Die vorliegende Erfindung betrifft ein Verfahren zum Betreiben eines Kommunikationsnetzwerkes und eine Netzwerkanordnung, welche mit dem vorgeschlagenen Verfahren arbeitet. Das Verfahren zum Betreiben kann insbesondere in einer Ethernet-Umgebung zum Einsatz kommen.

Kommunikationsnetzwerke finden immer breitere Anwendung zum Messen, Steuern und Regeln komplexer technischer Systeme. Beispielsweise werden zunehmend Netzwerke in Kraftfahrzeugen eingesetzt, um Fahrzeugsteuerungssysteme auszubilden. In entsprechenden komplexen und sicherheitsrelevanten technischen Systemen werden hohe Anforderungen an die Verfügbarkeit der als Netzwerkeinrichtungen vorgesehenen Steuerungselemente gestellt. Beim Ausfall von einzelnen Komponenten, wie beispielsweise Sensoren oder Steuereinrichtungen, darf dies nicht zum Ausfall des Gesamtsystems führen. Besonders sicherheitsrelevant sind Drive-by-Wire-Systeme, bei denen elektromotorisch über eine Netzwerkkopplung von Sensor-, Steuer- und Aktoreinrichtungen die Lenkradstellung in Radpositionen umgesetzt wird.

In der Vergangenheit wurden redundante Ausführungen besonders kritischer Komponenten eingesetzt, so dass im Fehlerfall die jeweilige Backup oder redundante Komponente, die jeweilige Aufgabe übernehmen kann. Bei mehreren redundanten Komponenten muss sichergestellt sein, dass nur eine der beiden oder mehreren Steuereinrichtungen, die jeweilige Steuerhoheit innehat. Außerdem dürfen nicht widersprüchliche Steuerungsbefehle für gleiche Steuerfunktionalitäten entstehen. Deshalb ist es wünschenswert, dass alle Steuerungskomponenten über dieselben Informationen oder Daten in dem Netzwerk verfügen.

Insofern müssen Fehler in Form von inkonsistenten Daten, die beispielsweise bei einer Datenübertragung über das verwendete Netzwerk korrumpiert sein können, erkannt werden. Eine Standard-Netzwerkumgebung, die weit verbreitet ist, basiert auf dem Ethernet-Protokoll. Die Verwendung von Ethernet-Infrastrukturen hat den Vorteil, dass standardisierte Netzwerkeinrichtungen und Verfahren zum Einsatz kommen können. In der Vergangenheit wurden jedoch auch proprietäre Datenbusse verwendet, um Steuerungskomponenten mit innerer Redundanz, also doppelt ausgelegter Funktionalität, miteinander zu verknüpfen.

Beispielsweise ist in der DE 102 43 713 A1 eine redundante Steuergeräteanordnung offenbart. Dabei sind über einen Datenbus vernetzte Steuergeräte vorgesehen, die redundante Steuerfunktionen innehaben. Die redundanten Steuergeräte sind über Trennschalter an den Datenbus gekoppelt, so dass bei einer bestimmten Bewertungssituation die jeweilige Steuereinrichtung durchgeschaltet oder entkoppelt wird. Die DE 102 43 713 A1 sieht dabei redundante Datenbussysteme vor, wobei redundante Steuerkomponenten in einer jeweiligen Netzwerkeinrichtung Original- und Backup-Daten, beispielsweise durch Bit-Inversion erzeugen, welche über die getrennten Bussysteme verschickt werden. Einen ähnlichen Ansatz verfolgt die WO2006/002695 A1. Nach dem Stand der Technik wird insofern ein doppelt ausgeführtes Kommunikationssystem verwendet, bei dem von einem Teilnehmer eingespeiste Informationen von allen Teilnehmern empfangen werden. Nachteilig dabei ist die Verwendung von doppelt ausgeführten Datenbussen, wie Flex-Ray oder CAN. Es wäre wünschenswert, bekannte oder Standard-Kommunikationsnetzwerk-Protokolle einzusetzen, wobei Fehler bei der Datenkommunikation rasch und zuverlässig erkannt werden können.

Aus dem Dokument WO 2009/098616 A1 ist ein Verfahren zum Betreiben eines Kommunikationsnetzwerks für an das Kommunikationsnetzwerk gekoppelte Netzwerkeinrichtungen bekannt, wobei eine jeweilige Netzwerkeinrichtung eine Switch-Einrichtung, eine erste Steuereinrichtung, welche an die Switch-Einrichtung gekoppelt sind, umfasst, und wobei die Switch-Einrichtung für die erste Steuereinrichtung jeweils einen Empfangsport und einen Sendeport zum Senden und Empfangen von Daten über das Kommunikationsnetzwerk hat, wobei das Verfahren umfasst: Erzeugen von ersten Daten durch die Steuereinrichtung; Senden der ersten Daten von der ersten Steuereinrichtung über die Switch-Einrichtung; Senden der ersten Daten über einen ersten Kommunikationspfad; Senden der ersten Daten über einen zweiten Kommunikationspfad; wobei die Daten des ersten und des zweiten Kommunikationspfads dieselben Netzwerkeinrichtungen in entgegen gesetzter Richtung durchlaufen.

Es ist daher eine Aufgabe der vorliegenden Erfindung, die Fälschungs- und Ausfallsicherheit einer Datenübertragung zu erhöhen.

Diese Aufgabe wird erfindungsgemäß durch die Merkmale des Patentanspruchs 1 gelöst. Dadurch können nicht nur die erste und zweite Steuereinrichtung und die auf den Kommunikationspfaden liegenden Netzwerkeinrichtungen die Integrität der Daten überprüfen, sondern auch Ausfälle in und von den Kommunikationspfaden erkannt werden.

Demgemäß wird ein Verfahren zum Betreiben eines Kommunikationsnetzwerkes, an welches Netzwerkeinrichtungen gekoppelt sind, vorgeschlagen. Eine jeweilige Netzwerkeinrichtung umfasst eine Switch-Einrichtung, eine erste und eine zweite Steuereinrichtung, welche an die Switch-Einrichtung gekoppelt ist. Die Switch-Einrichtung für die erste und die zweite Steuereinrichtung hat jeweils einen Empfangsport und einen Sendeport zum Senden und Empfangen von Daten über das Kommunikationsnetzwerk.

Das Verfahren umfasst:
Erzeugen von ersten Daten durch die erste Steuereinrichtung und zweiten Daten durch die zweite Steuerreinrichtung, wobei die ersten Daten und die zweiten Daten durch eine vorgegebene Kodierung miteinander verknüpft sind;
Senden der ersten Daten von der ersten Steuereinrichtung über die Switch-Einrichtung an die zweite Steuereinrichtung und Senden der zweiten Daten von der zweiten Steuereinrichtung über die Switch-Einrichtung an die erste Steuereinrichtung;
Senden der ersten Daten und der zweiten Daten über einen ersten Kommunikationspfad von dem Sendeport der Switch-Einrichtung für die erste Steuereinrichtung zu dem Empfangsport der Switch-Einrichtung für die zweite Steuereinrichtung;
Senden der ersten Daten und der zweiten Daten über einen zweiten Kommunikationspfad von dem Sendeport der Switch-Einrichtung für die zweite Steuereinrichtung zu dem Empfangsport der Switch-Einrichtung für die erste Steuereinrichtung.

Dabei durchlaufen die Daten des ersten und des zweiten Kommunikationspfads dieselben Netzwerkeinrichtungen in entgegen gesetzter Richtung.

Das Kommunikationsnetzwerk selbst kann eine Ethernet-Infrastruktur umfassen. Die Switch-Einrichtung kann auch als Bridge- oder Router-Einrichtung bezeichnet werden. Bei Netzwerkeinrichtungen spricht man auch von Netzwerk-Knoten, Netzwerk-Komponenten oder Netzwerk-Elementen.

Als in den Netzwerkeinrichtungen vorgesehene Steuereinrichtungen kommen beispielsweise eine CPU, ein Mikroprozessor oder auch andere programmierbare Schaltkreise in Frage. Als Steuereinrichtung kann ferner eine Sensor- oder Aktoreinrichtung verstanden werden.

Das Kommunikationsnetzwerk oder Netzwerk-Protokoll sieht vorzugsweise Punkt-zu-Punkt-Verbindungen von einem Teilnehmer oder einer Netzwerkeinrichtung zu einer anderen vor. Dabei kann eine bidirektionale oder Duplex-Kommunikation möglich sein.

Die ersten und zweiten Daten, welche über eine vorgegebene Kodierung miteinander verknüpft sind, können beispielsweise durch eine Bit-Inversion erzeugt sein. Die vorgegebene Kodierung lässt eine Konsistenzprüfung der beiden Daten miteinander zu. Ist beispielsweise durch den Datentransfer über das Netzwerk eines der Daten(pakete) gestört, kann dies durch Vergleich mit dem jeweils anderen Daten(paket) unter Berücksichtigung der jeweiligen Kodierung erkannt werden.

Insbesondere bei Ethernet basierten Kommunikationsnetzwerken ist eine bidirektionale Kommunikation (sog. Duplex-Kommunikation) möglich. Insofern verläuft der erste Kommunikationspfad vom Sendeport der Switch-Einrichtung des ersten Steuergeräts zum Empfangsport der Switch-Einrichtung des zweiten Steuergeräts, sowie der zweite Kommunikationspfad vom Sendeport der Switch-Einrichtung des zweiten Steuergeräts zum Empfangsport der Switch-Einrichtung des ersten Steuergeräts. Der erste Kommunikationspfad verläuft beispielsweise ringförmig über weitere Switch-Einrichtungen oder weitere Netzwerkeinrichtungen über das Kommunikationsnetzwerk. Der zweite Kommunikationspfad durchläuft die Netzwerkeinrichtungen in entgegengesetzter Richtung. Insofern wird ein redundanter Versand und eine Prüfung der Funktionsfähigkeit aller beteiligten Netzwerkeinrichtungen möglich. Vorzugsweise werden die ersten und zweiten Daten von der ersten zur zweiten Steuereinrichtung oder umgekehrt ausschließlich über die Switch-Einrichtung innerhalb der Netzwerkeinrichtung geführt.

Das Verfahren zum Betreiben eines Kommunikationsnetzwerks, insbesondere auf Ethernet-Basis führt zu einer Ringstruktur, wobei die sich ergebenden Kommunikationsrichtungen des Ethernet-Rings verwendet werden. Im Fehlerfall einer der mit einer Steuerungseinheit verbundenen Switch-Einrichtung einer Netzwerkeinrichtung, kann dabei nur eine der Richtungen betroffen sein, so dass nach wie vor ein konsistentes Datum bzw. Daten übermittelt wird/werden. Durch Vergleich der auf unterschiedlichen Kommunikationspfaden versendeten Daten, die insbesondere über eine Kodierung miteinander verknüpft sind, lässt sich eine flexible und zuverlässige Fehleranalyse durchführen. Man kann einfach die Steuerungskomponenten oder Einrichtungen eruieren, welche zu einem Fehler geführt haben. Diese werden vorzugsweise passiviert oder ausgeschaltet.

Bei Ausführungsformen des Verfahrens umfasst dasselbe ferner:
Senden der ersten Daten und der zweiten Daten über den Sendeport der Switch-Einrichtung für die erste Steuereinrichtung an den Empfangsport der Switch-Einrichtung für die zweite Steuereinrichtung über mindestens eine weitere Switch-Einrichtung einer weiteren Netzwerkeinrichtung mit einer ersten und zweiten Steuereinrichtung; und
Senden der ersten Daten und der zweiten Daten über den Sendeport der Switch-Einrichtung für die zweite Steuereinrichtung an den Empfangsport der Switch-Einrichtung für die erste Steuereinrichtung über mindestens eine weitere Switch-Einrichtung einer weiteren Netzwerkeinrichtung mit einer ersten und zweiten Steuereinrichtung.

Dabei werden in einer jeweiligen weiteren Switch-Einrichtung an einem Empfangsport für die zweite Steuereinrichtung der weiteren Switch-Einrichtung empfangene Daten an einen Sendeport für die erste Steuereinrichtung der weiteren Switch-Einrichtung weitergeleitet. An einem Empfangsport für die erste Steuereinrichtung der weiteren Switch-Einrichtung empfangene Daten werden an einen Sendeport für die zweite Steuereinrichtung der weiteren Switch-Einrichtung weitergeleitet.

Die unkodierten bzw. kodierten Daten werden somit von einem ersten Kanal, der von einer ersten Steuereinrichtung ausgeht, zu einem Kanal, welcher der zweiten Steuereinrichtung zugeordnet ist, versendet. Dies erfolgt auch umgekehrt, wodurch die sendende Steuerungskomponente feststellen kann, ob der jeweils andere Kanal, welcher der zweiten (redundanten) Steuereinrichtung zugeordnet ist, dasselbe Datenergebnis hat. Insofern kann festgestellt werden, ob der zugeordnete Ethernet-Switch bzw. die Switch-Einrichtung zuverlässig funktioniert. Wird erkannt, dass die der Steuereinrichtung zugeordnete Switch-Einrichtung fehlerhaft agiert, passiviert sich vorzugsweise die sendende Steuereinrichtung.

Das Verfahren kann ferner umfassen:
Vergleichen der ersten Daten mit den zweiten Daten in der ersten und/oder zweiten Steuereinrichtung zum Erzeugen eines Vergleichsergebnisses; und
Passivieren der Netzwerkeinrichtung in Abhängigkeit von dem Vergleichsergebnis.

Wird erkannt, dass die ersten und zweiten Daten nicht miteinander konsistent sind, das heißt, nicht durch die vorgegebene Kodierung miteinander verknüpft sind, lässt sich ein Fehler bei der Datenübertragung oder Erzeugung erkennen.

Das Verfahren kann außerdem umfassen:
erneutes Senden der ersten und der zweiten Daten über den ersten und den zweiten Kommunikationspfad.

Falls beispielsweise Daten in einem Kommunikationszyklus von der sendenden Steuereinrichtung nicht wieder erkannt oder empfangen werden, kann durch mehrfaches Versenden und Überprüfen auf korrekt empfangene Daten auf eine im Kommunikationspfad vorliegende fehlerhafte Netzwerk-Komponente geschlossen werden.

Bei dem Verfahren können ferner in einer weiteren Netzwerkeinrichtung die ersten Daten und die zweiten Daten an Eingangsports für unterschiedliche Steuereinrichtungen empfangen werden und die empfangenen Daten miteinander verglichen werden.

Vorzugsweise umfasst das Verfahren zum Betreiben der Netzwerkanordnung ferner das Anzeigen einer Fehlermeldung, falls verglichene erste Daten und zweite Daten nicht durch die vorgegebene Kodierung miteinander verknüpft sind.

Schließlich wird eine Netzwerkanordnung mit mehreren Netzwerkeinrichtung vorgeschlagen. Die Netzwerkeinrichtungen sind an ein Kommunikationsnetzwerk, insbesondere eine Ethernet-Infrastruktur, gekoppelt, und eine jeweilige Netzwerkeinrichtung umfasst eine Switch-Einrichtung, eine erste und eine zweite Steuereinrichtung. Dabei ist die Switch-Einrichtung an die Steuereinrichtungen gekoppelt und die Switch-Einrichtung umfasst jeweils einen Empfangsport und einen Sendeport für die erste und zweite Steuereinrichtung zum Senden und Empfangen von Daten über das Kommunikationsnetzwerk. Die Netzwerkeinrichtungen sind eingerichtet, um ein Verfahren, wie zuvor beschrieben, durchzuführen.

Die Netzwerkanordnung ist insbesondere Teil eines Fahrzeugs.

Die Netzwerkeinrichtungen können Sensoreinrichtungen oder Aktoreinrichtungen sein. Als Sensoreinrichtungen sind Drehzahlsensoren, Brems- oder Schaltsteuerungseinrichtungen denkbar. Es können auch Steuereinrichtungen eingesetzt sein, die beispielsweise ein Drive-by-Wire ermöglichen. Dabei werden beispielsweise Lenk- oder Beschleunigungsimpulse elektronisch über das Netzwerk an entsprechende Aktoren übergeben, so dass die gewünschte Reaktion des Fahrzeugs einsetzt.

Insgesamt ergibt sich eine besonders zuverlässige Netzwerkanordnung, welche auch bei Störungen von Kommunikationskanälen sicher funktioniert. Die redundante ringförmige Kommunikationspfad-Einrichtung ermöglicht eine konsistente Steuergerätekommunikation und aufwandsgünstige Fehleranalyse und Korrektur.

In Ausführungsformen der Netzwerkanordnung ist mindestens eine Netzwerkeinrichtung mit einer ersten und einer zweiten Switch-Einrichtung ausgestattet, wobei die erste Switch-Einrichtung der ersten Steuereinrichtung zugeordnet ist und die zweite Switch-Einrichtung der zweiten Steuereinrichtung zugeordnet ist. Dabei umfassen die Switch-Einrichtungen jeweils mindestens zwei Ports, und die Switch-Einrichtungen sind kommunikativ miteinander gekoppelt. Die Kopplung kann netzwerkeinrichtungsintern erfolgen oder aber mit Hilfe von Sende- und Eingangsports der Switch-Einrichtungen.

Bei weiteren Ausführungsformen der Netzwerkanordnung können ferner Einfach-Netzwerkeinrichtungen mit jeweils einer Steuereinrichtung und einer Switch-Einrichtung in der Netzwerkanordnung vorgesehen sein. Einfach-Netzwerkeinrichtungen haben dabei keine redundante Steuereinrichtung und können für weniger sicherheitsrelevante Funktionen vorgesehen werden.

Die Netzwerkeinrichtungen sind vorzugsweise jeweils als einzelner FPGA, ASIC, IC Chip, oder fest verdrahteter Mikroschaltkreis ausgeführt.

Weiterhin wird ein Computerprogrammprodukt vorgeschlagen, welches auf einer oder mehrerer programmgesteuerten Einrichtung die Durchführung des wie oben erläuterten Verfahrens zum Betreiben einer Netzwerkanordnung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in frage.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordndung, der Netzwerkeinrichtung oder eines Netzwerkknotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Darstellung einer ersten Ausführungsform einer Netzwerkanordnung;
- Fig. 2: eine schematische Darstellung einer zweiten Ausführungsform einer Netzwerkanordnung;
- Fig. 3: eine schematische Darstellung einer dritten Ausführungsform einer Netzwerkanordnung; und
- Fig. 4-6: schematische Darstellungen der zweiten Ausführungsform der Netzwerkanordnung mit Kommunikationsabläufen zur Erläuterung von Verfahrensaspekten der Fehleranalyse.

In den Figuren sind gleiche oder funktionsgleiche Elemente mit denselben Bezugszeichen versehen worden, sofern nichts anderes angegeben ist.

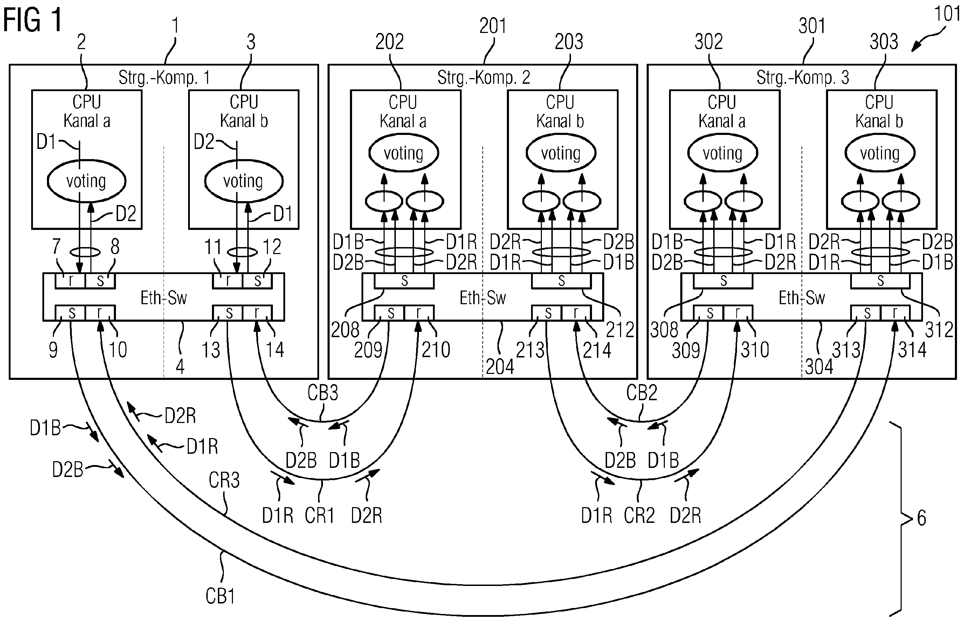

In der Fig. 1 ist eine schematische Darstellung einer ersten Ausführungsform einer Netzwerkanordnung dargestellt. Die Figuren dienen ferner, das Verfahren zum Betreiben der Netzwerkanordnung zu erläutern.

Die Fig. 1 zeigt eine Netzwerkanordnung 101, welche beispielsweise als Ethernet-Netzwerk in einem Fahrzeug eingesetzt werden kann. Dabei sind beispielhaft drei Netzwerkeinrichtungen 1, 201, 301 dargestellt. Es kann sich beispielsweise um Steuerungskomponenten handeln. Die Netzwerkeinrichtungen 1, 201, 301, welche im Folgenden auch als Netzwerk-Knoten oder Steuerungskomponenten bezeichnet werden, haben jeweils redundante Steuereinrichtungen 2, 3, 202, 203, 302, 303. Die Netzwerkeinrichtungen 1, 201, 301 können auch als Teilnehmer des Netzwerks bezeichnet werden.

Die Steuereinrichtungen 2, 3, 202, 203, 302, 303 sind angepasst, um bestimmte Aufgaben oder Funktionen zu vollziehen. Dies kann beispielsweise eine Sensorerfassung oder ein Aktor sein. Man kann sie auch als CPUs oder Mikroprossoren implementieren. Denkbar ist zum Beispiel, dass die Steuerungskomponente 1 zum Erfassen eines Pedalstandes oder einer Lenkbewegung im Fahrzeug eingerichtet ist. Die Netzwerkeinrichtungen 1, 201, 301 haben jeweils eine interne Switch-Einrichtung 4, 204, 304. Dabei ist die jeweilige Steuereinrichtung 2, 3, 202, 203, 302, 303 an Sendeports 8, 12, 208, 212, 308, 312 der jeweiligen Switch-Einrichtung, welche als Ethernet-Switch 4, 204, 304 ausgestaltet ist, gekoppelt.

Die jeweils redundanten Steuereinrichtungen 2, 3, 202, 203, 302, 303, welche auch als CPUs oder Prozessoren bezeichnet werden, können insofern Daten aus dem Netzwerk 6 über die jeweilige Switch-Einrichtungen 4, 204, 304 empfangen und auswerten. Zur Kopplung an die Netz-Infrastruktur bzw. das eigentliche Kommunikationsnetzwerk 6, sind die Switch-Einrichtungen 4, 204, 304 mit Sendeports 9, 13 209, 213, 309, 313 und Empfangsports 10, 14, 210, 214, 310, 314 ausgestattet.

Die Steuerungskomponente oder Netzwerkeinrichtung 1 umfasst eine Switch-Einrichtung 4 mit weiteren Empfangsports 7, 11, welche jeweils einer der CPUs 2, 3 zugeordnet ist. Es ist zum Beispiel denkbar, dass die Steuerungskomponente bzw. Netzwerkeinrichtung 1 ein Steuersignal bzw. Steuerdaten an eine weitere Steuerungskomponente im Netzwerk sendet. Dabei ist insbesondere bei sicherheitsrelevanten Anwendungen in Kraftfahrzeugen, beispielsweise beim Drive-by-Wire zu gewährleisten, dass die Steuerdaten an allen Netzwerk-Knoten konsistent vorliegen.

Bereits Netzwerk-Komponenten-intern erfolgt ein Abgleich der redundant erzeugten Steuerdaten D1 und D2. Die CPU 2 liefert Daten D1 und die CPU 3 liefert Daten D2. Dabei sind die Daten über eine Kodierung miteinander verknüpft. Das heißt, die Daten D1 ergeben sich aus den Daten D2 und umgekehrt über eine mathematische Operation. Denkbar ist beispielsweise eine einfache Bit-Inversion, so dass die Daten D1 das Inverse der Daten D2 und umgekehrt sind.

Über die Switch-Einrichtung 4 werden die Daten D1 von der CPU 2 an die CPU 3 übermittelt. Dies erfolgt durch eine Übergabe der Daten D1 an den Empfangsport 7 der Switch-Einrichtung 4, welche die Daten über den Sendeport 12 an die CPU 3 leitet. Genauso werden die Daten D2 von der CPU 3 an den zugeordneten Empfangsport 11 übergeben, und die Switch-Einrichtung 4 leitet die Daten über den Sendeport 8 an die CPU 2 weiter. Es kann nun durch Vergleich der Daten D1 und D2 miteinander jeweils in der CPU 2 und in der CPU 3 ein Konsistenzcheck stattfinden. Sofern die Daten miteinander konsistent sind, das heißt, modulo der vorgegebenen Kodierung - beispielsweise eine Bit-Inversion - übereinstimmen, kann davon ausgegangen werden, dass der Datenempfang über die Ports 7 und 11, die Datensendung über die Ports 8 und 12, die Switch-Einrichtung 4 für den Datenaustausch zwischen eben diesen Ports, sowie auch die CPUs 2, 3 korrekt funktionieren. Liefert das Vergleichsergebnis hingegen eine Inkonsistenz der Daten D1 und D2 miteinander, deutet dies auf einen Fehler der CPUs 2, 3 oder der Switch-Einrichtung hin, worauf eine mögliche Reaktion zur Datenkonsistenzsicherung die Passivierung - d.h. Deaktivierung - der Steuerungskomponente 1 ist.

Die Netzwerkanordnung 101 ist ferner für ringförmige Kommunikationspfade ausgelegt. Durch die insbesondere bei einer Ethernet-Infrastruktur vorliegende Möglichkeit von Punkt-zu-Punkt-Verbindungen der Teilnehmer oder Netzwerkeinrichtungen untereinander, können zwei voneinander getrennte Kommunikationsringe entstehen, die sich nur die jeweiligen Switch-Einrichtungen teilen, dort aber empfangs- und sendeseitig keine gemeinsamen Ports verwenden. In dem Ausführungsbeispiel der Fig. 1 ergibt sich ein erster Kommunikationspfad, der aus den Segmenten CB1, CB2 und CB3 zusammengesetzt ist. Über diese Segmente CB1, CB2 und CB3 laufen die Daten D1 und D2, was mit Hilfe der Pfeile D1B und D2B angedeutet ist. Dabei steht der Zusatz B für den Kommunikationspfad B.

Ferner verläuft in entgegengesetzter Kommunikationsrichtung ein Kommunikationspfad, der aus den Segmenten CR1, CR2 und CR3 zusammengesetzt ist. Über diesen Pfad werden ebenfalls die Daten D1 und D2 gesendet, was durch die Pfeile D2R und D1R angedeutet ist. Dabei steht der Zusatz R für den Kommunikationspfad R.

Die Daten D1 und D2 werden somit über disjunkte Kommunikationspfade an alle im Netzwerk vorliegenden Steuerungskomponenten 201, 301 übermittelt. Jede CPU 202, 203, 302, 303 erhält die kodierten sowie unkodierten Daten D1, D2 über unterschiedliche Kommunikationspfade, nämlich die beiden Ringe mit entgegengesetzter Kommunikationsrichtung. Jede CPU 202, 203, 302, 303 vergleicht die empfangenen Werte für die Daten D1, D2 über einen Kommunikationsweg oder -pfad.

Beispielsweise erhält die CPU 303 über den Kommunikationspfad CB1 die Daten D1B und D2B. Diese werden am Eingangsport 314 der Switch-Einrichtung 304 angenommen. An dem Sendeport 312 übergibt die Switch-Einrichtung 304 die Daten D1B und D2B, welche am Eingangsport 314 empfangen wurden, an die CPU 303 weiter. Dort kann ein Vergleich der Daten D1B und D2B erfolgen. Sind diese miteinander konsistent, spricht dies für einen fehlerfreien Kommunikationspfad CB1.

Die CPU 303 erhält ferner über den zweiten Kommunikationspfad, der sich aus den Segmenten CR1 und CR2 ergibt, die Daten D1R und D2R. Die Daten D1R und D2R werden von der Switch-Einrichtung 304 am Empfangsport 310 empfangen und an den Sendeport 312, welcher der CPU 303 zugeordnet ist, ausgegeben. Es kann erneut eine Konsistenzprüfung erfolgen. Darüber hinaus kann die CPU 303 nun einen Vergleich oder Voting der über den Ringpfad CB1 erhaltenen Daten sowie über den Ringpfad CR1 und CR2 erhaltenen Daten durchführen. Im ungestörten Fall sind sowohl die Daten D1R und D2R miteinander konsistent, sowie die Daten D1B und D2B, sowie die über CB1 und über CR1-CR2 empfangenen und einzeln als bereits konsistent festgestellten Daten. Daraus ergibt sich, dass die zu Grunde liegenden Daten D1 und D2, welche von der CPU 2 bzw. 3 erzeugt wurden, korrekt sind. Treten bei den Vergleichen oder den Votings der über CB1 und über CR1-CR2 empfangenen und einzeln als bereits konsistent festgestellten Daten in der Steuerungskomponente 3 bzw. den CPUs 302, 303 Inkonsistenzen auf, kann auf einen Kommunikationsfehler geschlossen werden.

Ähnliche Konsistenzprüfungen erfolgen in der Steuerungskomponente 201 bzw. den CPUs oder Steuereinrichtungen 202, 203. Falls eine der beteiligten Switch-Einrichtungen 4, 204, 304 fehlerhaft arbeiten sollte oder ausfällt, kann ein entsprechender Netzwerkfehler erkannt werden, wenn die Daten D1, D2 wiederholt gesendet werden. In der Regel werden mehrere Kommunikationszyklen mit unterschiedlichen Daten unterschiedlicher Steuereinrichtungen auf dem Netzwerk 6 verschickt. Auf Grund anderer Daten, die in der Fig. 1 nicht dargestellt sind, können die jeweiligen Steuerungskomponenten 201, 301 feststellen, ob ihr eigener Switch 204, 304 defekt ist oder nicht. Insofern können verschiedene Fehlerszenarien erkannt und behandelt werden.

Durch die disjunkten Datenpfade CB1, CB2, CB3 und CR1, CR2, CR3, treten Fehler bei der Übertragung nur unabhängig voneinander auf. Durch die Ausgestaltung als Ethernet-Ring der Netzwerk-Knoten oder Komponenten 1, 201, 301, ist eine weitestgehend konsistente Kommunikation von Steuergeräten, die insbesondere redundante Steuereinrichtungen 2, 3 haben, gewährleistet.

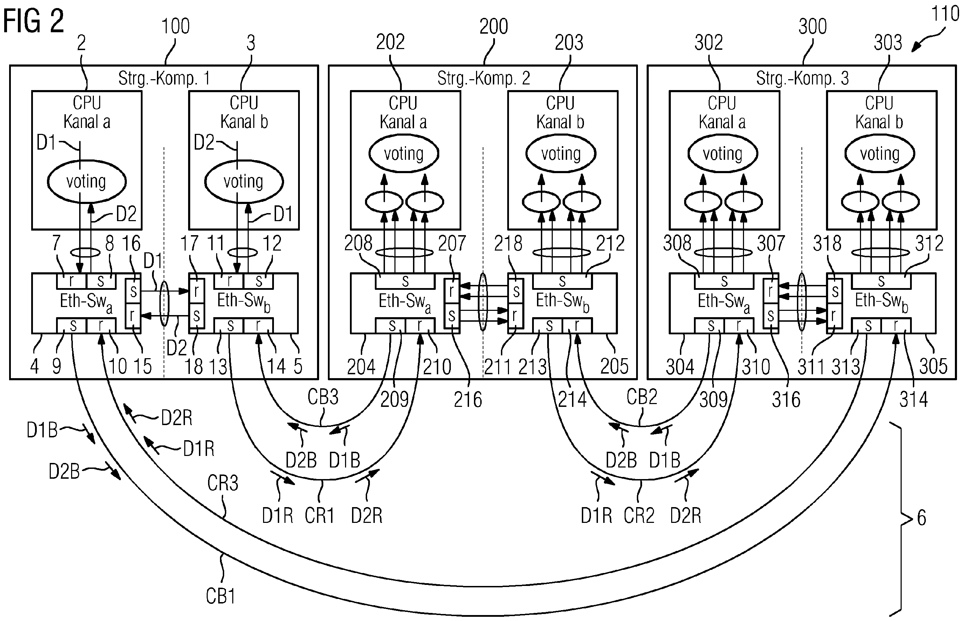

In der Fig. 2 ist eine schematische Darstellung einer zweiten Ausführungsform einer Netzwerkanordnung 110, welche sich auch zur Durchführung des vorgeschlagenen Verfahrens eignet, dargestellt.

Die Fig. 2 zeigt im Wesentlichen dieselben Elemente wie sie in Bezug auf die Fig. 1 angesprochen wurden. Allerdings sind die Steuerungskomponenten bzw. Netzwerk-Knoten oder Netzwerkeinrichtungen 100, 200, 300 mit redundanten Ethernet-Switch-Einrichtungen 4, 5, 204, 205, 304, 305 ausgestattet. Dadurch lässt sich eine zusätzliche Verlässlichkeit in der Datenkommunikation erzielen.

Beispielsweise umfasst die Netzwerkeinrichtung 100 eine CPU 2 und eine zugeordnete Ethernet-Switch-Einrichtung 4. Die Ethernet-Switch-Einrichtung 4 hat einen Empfangsport 7 und einen Sendeport 8, welche mit der CPU 2 kommunikativ gekoppelt sind. Ein weiterer Sendeport 9 und Empfangsport 10 sind an das Netzwerk 6 zum Senden und Empfangen von Daten gekoppelt. Ähnlich hat die CPU 3 eine Ethernet-Switch-Einrichtung 5, die einen Empfangsport 11 und einen Sendeport 12 zum Koppeln an die CPU 3 hat. Die Ethernet-Switch-Einrichtung 5 hat ferner einen Sendeport 13 und Empfangsport 14 zum Ankoppeln an das Netzwerk 6. Darüber hinaus sind Sendeport und Empfangsport 15, 16, 17, 18 an den Ethernet-Switches 4, 5 vorgesehen, um eine Kopplung der beiden Switch-Einrichtungen 4, 5 untereinander vorzunehmen. Die beiden Switch-Einrichtungen 4, 5 sind dabei getrennt, beispielsweise als FPGA oder ASIC oder Mikrochip gefertigt.

Ein interner Konsistenzcheck in der Steuerungskomponente 100 erfolgt durch Erzeugen der Daten D1, Übergabe an den Ethernet-Switch 4 am Port 7 und die Weiterleitung über die Portkombination 16, 17 an den Ethernet-Switch 5, welcher die Daten D1 an die CPU 3 liefert. Analog werden die Daten D2 über die Ports 11, 18, 15 und 8 an die CPU 2 übermittelt. Insofern kann ein interner Konsistenzcheck durch die konsistente Kodierung der Daten D1 und D2 miteinander erfolgen.

Analog haben die Steuerungskomponenten 200 und 300 voneinander getrennte Switch-Einrichtungen 204, 205, 304, 305. Die zwischen den beiden Switches 204, 205 bzw. 304, 305 übertragenen Daten sind in der Fig. 2 nicht mit Bezugszeichen versehen. Von oben nach unten werden jeweils vom Port 218 zum Port 207 Daten D2B und D1B übertragen. Vom Port 216 zum Port 211 werden die Daten D1R und D2R übertragen. Genauso werden vom Port 307 Daten vom Port 318 empfangen, die D2B und D1B entsprechen. Vom Port 311 werden Daten vom Port 316 empfangen, die D1R und D2R entsprechen.

Wie bereits im Hinblick auf die Ausführungsform, welche in der Fig. 1 dargestellt ist, erläutet wurde, erfolgt in den Steuerungskomponenten 200, 300 bzw. den internen CPUs 202, 203, 302, 303 ein Vergleich der empfangenen Daten D1R und D2R bzw. D1B und D2B. Ein anschließend als Voting bezeichnete Prüfen ermöglicht, wie bereits zur Fig. 1 erläutert wurde, eine detaillierte und zuverlässige Fehleranalyse und gegebenenfalls ein Passivieren von fehlerhaft arbeitenden Netzwerk-Komponenten.

Falls beispielsweise in der Steuerungskomponente 100 die Switch-Einrichtung 4 komplett ausfällt, können über den Kommunikationspfad CB1 keine Daten mehr übertragen werden. Über den entgegengesetzten Kommunikationspfad CR werden dann nur noch die kodierten Dateninformationen D2 empfangen, da die Originaldaten D1 nicht mehr von der Switch-Einrichtung 4 zum Kanal b bzw. der Switch-Einrichtung 305 gelangen. Anhand dieses Fehlerbildes können die Empfangs-CPUs folgern, dass der Sender, in dem Fall die Steuerungskomponente 1, fehlerhaft ist.

Falls hingegen ein Empfänger-Switch, beispielsweise die Switch-Einrichtung 204 in der Steuerungskomponente 200, ausfällt, erhält die CPU 202 im Kanal a nichts mehr, im Kanal b jedoch alle Daten über CB1 und CB2 vollständig. Aus diesem Fehlerbild kann die Steuerungskomponente 200 folgern, dass sie selbst defekt ist und wird abgeschaltet.

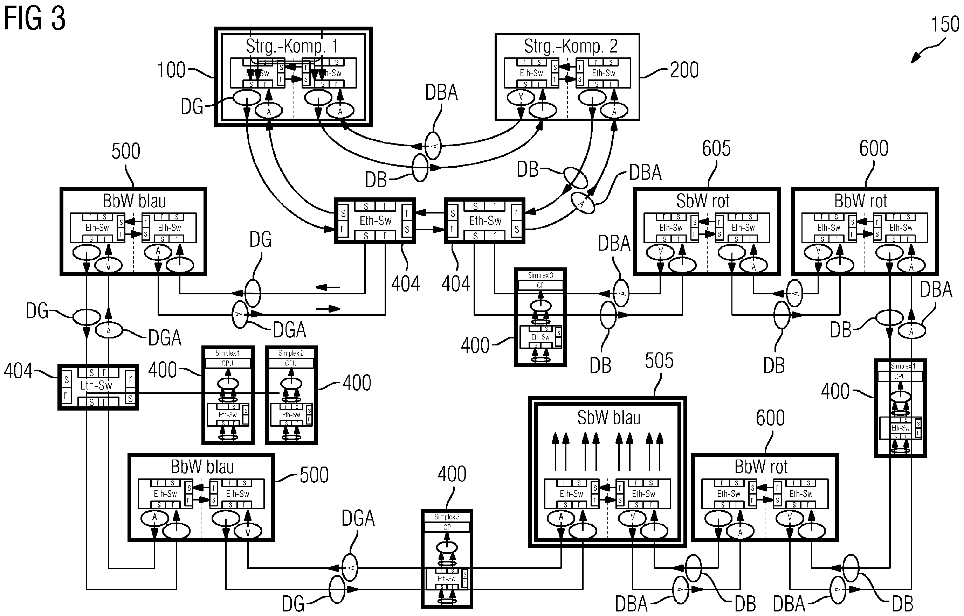

Die Fig. 3 zeigt eine schematische Darstellung einer dritten Ausführungsform einer Netzwerkanordnung 150. Dabei ist eine Erweiterung zur Anbindung von Sensoren und Aktoren in dem Netzwerk angedeutet. Man erkennt in der Fig. 3, dass wiederum eine ringförmige Ausführung der Ethernet-Infrastruktur vorgesehen ist. Dabei sind Netzwerkeinrichtungen 100, 200, 500, 605, 600 vorgesehen, die ähnlich aufgebaut sind, wie sie in der Fig. 2 dargestellt sind.

Es sind ferner Einfach-Netzwerk-Komponenten 400 vorgesehen, die keine redundanten Switches oder CPUs aufweisen. Diese sind als Simplex mit dem Bezugszeichen 400 versehen.

Darüber hinaus sind Ethernet-Switch-Einrichtungen 404 in der Netzwerkanordnung 150 vorgesehen.

In einer Fahrzeuganwendung sind beispielsweise Bremsaktoren (BbB) oder Steer-by-Wire-Aktoren (SbW) redundant vorgesehen. In der Darstellung der Fig. 3 sind die entsprechenden Aktoren 500, 600, 605, 505 jeweils mit "blau" oder "rot" beschriftet. Beispielsweise ist die Steuerungskomponente 100 aktiv, um die SbW-Komponente 505 mit Steuerdaten zu versorgen.

Durch die doppelringförmige Anordnung, wobei die beiden Einzelringe an zwei unterschiedlichen Stellen mittels Ethernet-Switch-Einrichtungen miteinander verbunden sind, ergeben sich zwei disjunkte Datenbusse, welche in unterschiedlicher Richtung im Netzwerk-Ring Kommunikation betreiben. Dies ist durch die Pfeile an den Kommunikationspfad-Segmenten angedeutet. Es ergeben sich Datenpakete DG, die von der Steuerungskomponente 1 zum Ethernet-Switch 404 zum BbW-blau 500 über den Ethernet-Switch 404 dem BbW-blau 500 über den Simplex zum SbW-blau 505 gelangen. Redundante Datenpakete DB gelangen von der Steuerungskomponente 100 über die Steuerungskomponente 200 zum Ethernet-Switch 404 über den Simplex 400 über die SbW-rot 605 und BbW-rot 600 und Simplex 400 zum BbW-rot 600 und schließlich zur SbW-blau 505. Mit DGA bzw. DBA sind die rückläufigen Datenpakete bezeichnet.

Bei der in der Fig. 3 dargestellten Konfiguration der Netzwerkanordnung 150 sind die Aktoren 505, 605 über redundant ausgeführte Ethernet-Switches 404 in der Art eines äußeren Rings an eine Ringstruktur aus den Steuerungskomponenten 100, 200 und den Ethernet-Switches 404 angebunden. Die jeweiligen Steuerbefehle oder Daten werden sowohl kodiert wie auch unkodiert über die Richtung des Kommunikationspfades DG bzw. DGA (nach links herum) versendet, sowie über den zweiten Kommunikationspfad DB bzw. DBA (nach rechts herum) verschickt. Innerhalb der Steer-by-Wire-Steuerungskomponente 505 erfolgt ein Vergleich und anschließendes Voting, wie es bezüglich der Fig. 1 und 2 erläutert wurde. Es kann somit zuverlässig erkannt werden, ob die Steuerungsbefehle bzw. Daten von der Steuerungskomponente 1 richtig sind.

Die Steuerungskomponente SbW-blau 505 antwortet ebenfalls über beide Kommunikationspfade bzw. Richtungen mit Daten DGA und DBA. Es ist möglich, alle im Netzwerk vorliegende Aktoren über zwei Kommunikationspfade von jeder Steuerungskomponente aus zu erreichen. Der Ausfall einer der Komponenten in den Teilnetzwerken DG/DGA oder DB/DBA kann nicht zum Ausfall der gesamten Kommunikation führen, da die Pakete DG/DGA und DB/DBA keine gemeinsamen Netzwerk-Komponenten nutzen.

Die Einfach-Netzwerkeinrichtungen 400 sind beispielsweise Aktoren, die keine inneren Redundanzen aufweisen, da die jeweilige Funktion unkritisch ist. Es ist möglich, dass Einfach-Netzwerkeinrichtungen 400 über Stichleitungen mit Ethernet-Switches 404 an die Ringstruktur gekoppelt sind. Dies ist in der Fig. 3 beispielsweise auf der linken Seite für die Einfach-Netzwerkeinrichtung 400, welche mit Simplex 1 und Simplex 2 bezeichnet ist, dargestellt. Insofern ist auch eine Kombination der Ringstruktur mit Ethernet-Stichleitungen im Kraftfahrzeug möglich.

Insgesamt erhält man durch die Kombination von Ethernet-Ringstrukturen mit kodierter Kommunikation, das heißt, Erzeugen von Daten, die über eine vorgegebene Kodierung miteinander verknüpft sind, eine doppelt ausgeführte Kommunikations-Topologie ohne dezidierte doppelte Infrastrukturen wie Kabel oder Leitungen, einsetzen zu müssen. Fehler in sendenden oder empfangenden Steuerungskomponenten können ausreichend schnell und zuverlässig erkannt werden. Insgesamt kann mit dem vorgeschlagenen Verfahren und den Netzwerkanordnungen eine gute Datenkonsistenz im Gesamtsystem erzielt werden.

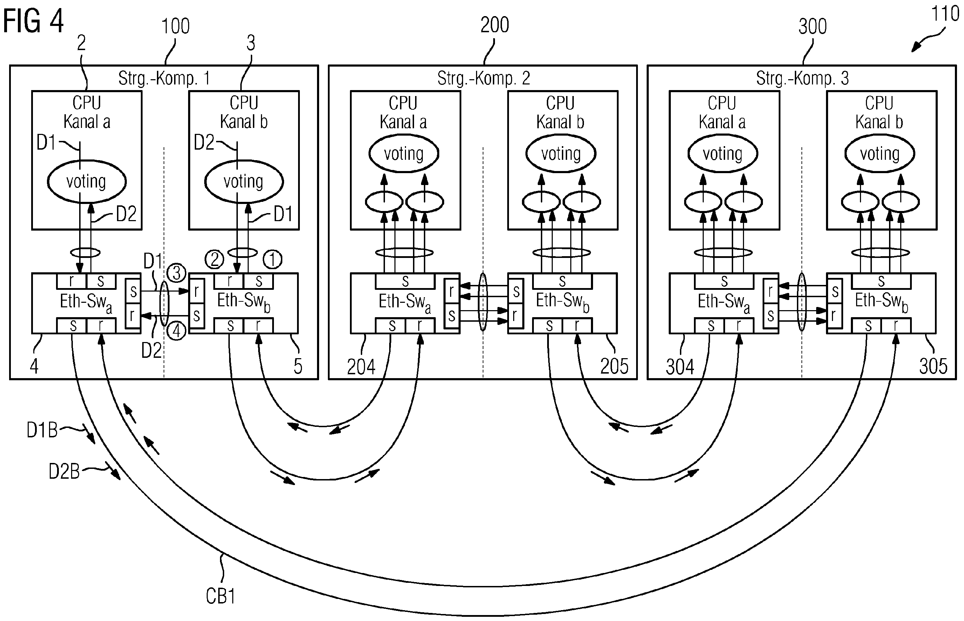

In den Fig. 4, 5 und 6 sind Fehlerszenarien für die Netzwerkanordnung, wie sie in der Fig. 2 dargestellt ist, näher erläutert. Dabei sind einige Pfeile, welche für die Datenübertragung zwischen verschiedenen Elementen stehen, mit in Kreis gestellten Ziffern (1) bis (4) markiert.

Es wird in Fig. 4 insbesondere die Steuerungskomponente 100 mit ihrer CPU 2 und 3 sowie den Switch-Einrichtungen 4 und 5 betrachtet und ein Fehler in der Switch-Einrichtung 5 angenommen. Man erkennt, dass bei Fehlern der Datenübertragung im Hinblick auf die Pfeile (1), (2), (3), (4) dennoch keine Inkonsistenz der Daten auftritt. Sofern einer der mit (1) - (4) markierten Pfeile bzw. die entsprechenden übertragenen Daten fehlerhaft ist, wird die Konsistenzüberprüfung in der CPU 2 oder 3 fehlschlagen. Das bedeutet, die Steuerungskomponente 100 wird deaktiviert oder passiviert. Dies führt dazu, dass die Steuerungskomponente 100 keine Daten mehr versendet, was auch von den übrigen Steuerungskomponenten 200, 300 im Netzwerk bzw. der Netzwerkanordnung 110 entsprechend registriert wird.

Für den Fall, dass alle mit (1) - (4) markierten Pfeile bzw. Kommunikationspfade fehlerfrei sind, muss geschlossen werden, dass die Switch-Einrichtung 5 intern fehlerhaft ist. Die übrigen Komponenten des Systems 110 kann man dann als fehlerfrei annehmen (die Wahrscheinlichkeit für unabhängige Doppelfehler wird als verschwindend gering erachtet, so dass unabhängige Doppelfehler in diesem Zusammenhang nicht betrachtet werden müssen). Das heißt, man geht davon aus, dass die CPU 2, 3 und der Switch 4 fehlerfrei arbeiten. Das bedeutet, die über den Kommunikationspfad bzw. das Kommunikationssegment CB1 übermittelten Daten D1B und D2B, werden korrekt zu den Steuerungskomponenten 200 und 300 übermittelt. Insofern verbleibt die Steuerungskomponente 100 trotz der Störung des Ethernet-Switches 5 funktionstüchtig und kann von den übrigen Steuerungskomponenten 200, 300 entsprechend registriert werden. Trotz des angedeuteten Fehlers in der Switch-Komponente 5 sind alle Daten konsistent im Netzwerk abrufbar und liegen konsistent in den Netzwerkeinrichtungen 100, 200, 300 vor.

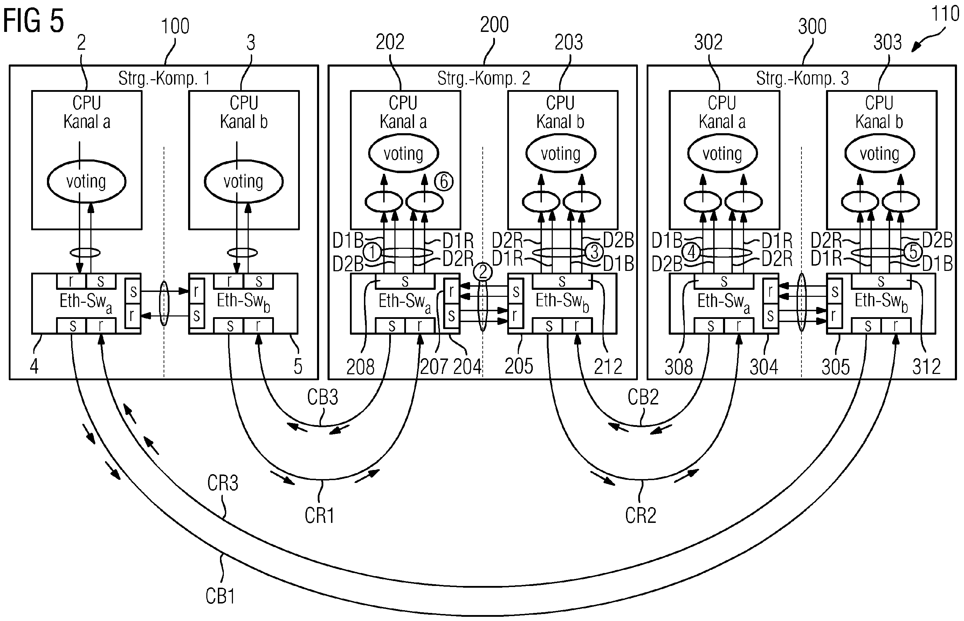

Die Fig. 5 zeigt eine weitere Fehlersituation in der Switch-Einrichtung 204, wobei die betrachteten Kommunikationspfade wiederum mit in Kreisen gesetzten Ziffern (1) - (6) markiert sind. Falls die Daten D1B und D2B an der Stelle (1) korrekt sind, sind auch die entsprechenden Daten D1B, D2B an der Stelle (2) und (3) richtig. Dasselbe gilt für die Pfeile an den Stellen (4) und (5): D1B und D2B an den Ports 308 und 312 sind konsistent. Das bedeutet, beide Kanäle (Kanal a und Kanal b) in der Steuerungskomponente 200 sowie in der Steuerungskomponente 300 erkennen konsistente Statusinformationen von der Steuerungskomponente 100. Das heißt, die Steuerungskomponente 100 wird korrekterweise als voll funktionsfähig bewertet und in den CPUs 202, 203, 302, 303 liegen konsistente Daten von Steuerungskomponente 100 vor.

Wenn eines der Daten D1B oder D2B an der Stelle (1) fehlerhaft ist, ergeben sich folgende Szenarien:
Sofern an der Stelle (6) die Daten D1R, D2R inkonsistent sind, erkennt die CPU 202, dass von der Steuerungskomponente 100 keine konsistenten Statusinformationen bzw. Daten erhalten werden. Insofern wird auf einen Fehler in der Steuerungskomponente 200 geschlossen, da CPU 203 konsistente Daten D1B und D2B erhält: Die Steuerungskomponente 200 passiviert sich. Die Steuerungskomponente 300 hingegen ist weiterhin voll funktionsfähig und erhält konsistente Statusinformationen von der Steuerungskomponente 100 zugesendet.

In dem Fall, dass an der Stelle (6) die Daten D1R und D2R fehlerfrei sind, empfängt die CPU 202 konsistente Daten D1R, D2R vom Port 208 und die CPU 203 konsistente Daten D1B, D2B vom Port 212 der jeweiligen Switch-Einrichtung 204, 205. An der Steuerungskomponente 300 sind zumindest die Daten D1R, D2R am Port 312 konsistent sowie auch am Port 308, da das Auftreten unabhängiger Doppelfehler im Wesentlichen ausgeschlossen wird. Insofern sind konsistente Statusdaten von der Steuerungskomponente 100 im Netzwerk zur Verfügung gestellt.

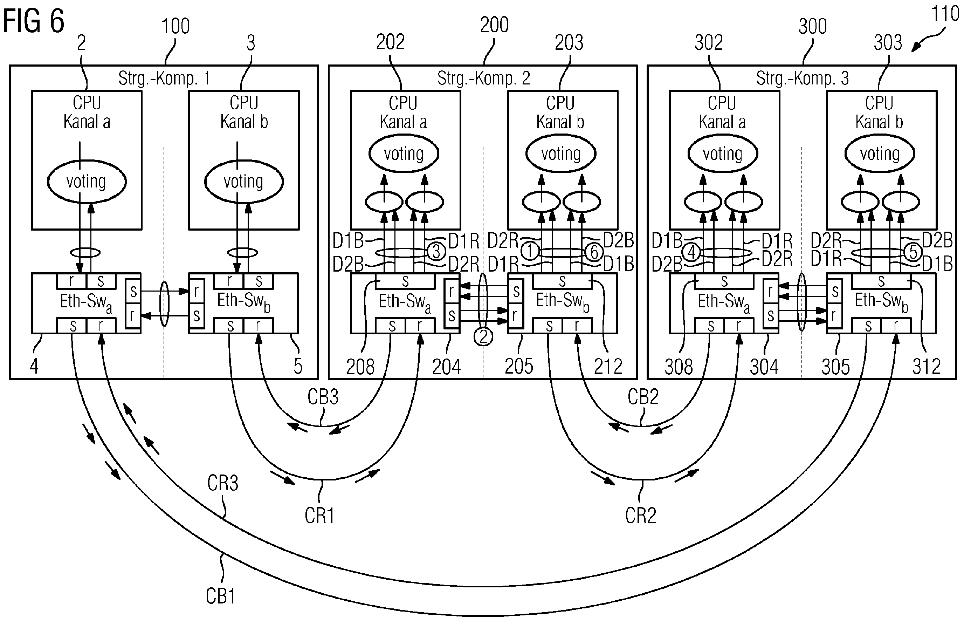

Schließlich zeigt die Fig. 6 noch eine weitere potenzielle Fehlersituation der Switch-Komponente 205 in einer Netzwerkanordnung 110. Es sind wiederum die betrachteten Kommunikationspfade mit in Kreisen gestellten Ziffern (1) - (6) markiert. Falls die an der Stelle (1) markierten Pfeile DR1, DR2 korrekte Daten liefern, sind auch die D1R, D2R entlang der beiden Pfeile jeweils bei der Position (2) und (3) korrekt. In der Steuerungskomponente 200 erkennen damit die CPUs 202 und 203 konsistente Statusinformationen von der Steuerungskomponente 100. Wegen des Ausschlusses eines Doppelfehlers, sind die Daten D1B, D2B and beiden CPUs 302 und 303 korrekt. Damit erkennen in der Steuerungskomponente 300 die CPUs 302 und 303 konsistente Statusinformation der Steuerungskomponente 100. Insofern sind alle Elemente der Netzwerkeinrichtung 100 bzw. Steuerungskomponente 100 funktionsfähig.

Für den Fall, dass an der Stelle (1) über Port 212 die Daten D1R und D2R, die bei CPU 203 ankommen, inkonsistent sind, ergeben sich folgende Fehlerszenarien:
Sofern an der Stelle (6) die Daten D1B, D2B inkonsistent sind, erkennt die CPU 203, dass von der Steuerungskomponente 100 keine konsistenten Statusinformationen erhalten werden. Die Steuerungskomponente 200 erkennt auf einen Fehler bei sich selbst und passiviert sich - da die CPU 203 weder aus D1B, D2B noch aus D1R, D2R konsistente Daten bekommen hat, jedoch wegen Ausschlusses eines Doppelfehlers D1R, D2R konsistente Daten an CPU 202 liefern - . Die Steuerungskomponente 300 hingegen ist weiter voll funktionsfähig und erhält konsistente Statusinformationen von der Steuerungskomponente 100 an dem Port 312 in Form der Daten D1B und D2B.

Sofern an der Stelle (1) am Port 212 die Daten D1R und D2R inkonsistent sind und an der Stelle (6) am Port 212 die beiden Daten D1B und D2B korrekt sind, erhält die CPU 203 konsistente Daten D1B und D2B und die CPU 202 konsistente Daten D1R und D2R am Port 208. Bei der Steuerungskomponente 300 sind dann zumindest die Daten D1B, D2B sowohl bei CPU 302 als auch bei CPU 303 konsistent. Insofern liegen an allen Steuerungskomponenten der Netzwerkanordnung 100, 200, 300 trotz des Fehlers konsistente Daten an.

Alle anderen Fehlerfälle sind aus Symmetriegründen bereits durch obige Erläuterungen abgedeckt.

Somit liefert das Verfahren sowie auch die vorgeschlagene Netzwerkanordnung mit ihrer Ringstruktur eine höchst konsistente Steuergerätekommunikation in sicherheitsrelevanten Anwendungen. Alle möglichen Einzelfehler führen entweder nicht dazu, dass in einer oder mehreren Netzwerkeinrichtungen keine konsistenten Daten erzeugt werden können, oder können innerhalb eines Kommunikationszyklus lokalisiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Betreiben eines Kommunikationsnetzwerks (101) für an das Kommunikationsnetzwerk (6) gekoppelte Netzwerkeinrichtungen (1), wobei eine jeweilige Netzwerkeinrichtung (1) eine Switch-Einrichtung (4), eine erste und eine zweite Steuereinrichtung (2, 3), welche an die Switch-Einrichtung (4) gekoppelt sind, umfasst, und wobei die Switch-Einrichtung (4) für die erste und die zweite Steuereinrichtung (2, 3) jeweils einen Empfangsport (10, 14) und einen Sendeport (9, 13) zum Senden und Empfangen von Daten über das Kommunikationsnetzwerk (6) hat, wobei das Verfahren umfasst:
Erzeugen von ersten Daten (D1) durch die erste Steuereinrichtung (2) und zweiten Daten (D2) durch die zweite Steuerreinrichtung (3), wobei die ersten Daten (D1) und die zweiten Daten (D2) durch eine vorgegebene Kodierung miteinander verknüpft sind;
Senden der ersten Daten (D1) von der ersten Steuereinrichtung (2) über die Switch-Einrichtung (4) an die zweite Steuereinrichtung (3) und Senden der zweiten Daten (D2) von der zweiten Steuereinrichtung (3) über die Switch-Einrichtung (4) an die erste Steuereinrichtung (2);
Senden der ersten Daten (D1) und der zweiten Daten (D2) über einen ersten Kommunikationspfad (CB1, CB2, CB3) von dem Sendeport (9) der Switch-Einrichtung (4) für die erste Steuereinrichtung (2) zu dem Empfangsport (14) der Switch-Einrichtung (4) für die zweite Steuereinrichtung (3);
Senden der ersten Daten (D1) und der zweiten Daten (D2) über einen zweiten Kommunikationspfad (CR1, CR2, CR3) von dem Sendeport (13) der Switch-Einrichtung (4) für die zweite Steuereinrichtung (3) zu dem Empfangsport (10) der Switch-Einrichtung (4) für die erste Steuereinrichtung (2);
wobei die Daten des ersten und des zweiten Kommunikationspfads (CB1, CB2, CB3, CR1, CR2, CR3) dieselben Netzwerkeinrichtungen (200, 300) in entgegen gesetzter Richtung durchlaufen.

2. Verfahren nach Anspruch 1, ferner umfassend:
Senden der ersten Daten (D1) und der zweiten Daten (D2) über den Sendeport (9) der Switch-Einrichtung (4) für die erste Steuereinrichtung (2) an den Empfangsport (14) der Switch-Einrichtung (4) für die zweite Steuereinrichtung (3) über mindestens eine weitere Switch-Einrichtung (204) einer weiteren Netzwerkeinrichtung (200) mit einer ersten und zweiten Steuereinrichtung (202, 203); und
Senden der ersten Daten (D1) und der zweiten Daten (D2) über den Sendeport (13) der Switch-Einrichtung (4) für die zweite Steuereinrichtung (3) an den Empfangsport (10) der Switch-Einrichtung (4) für die erste Steuereinrichtung (2) über mindestens eine weitere Switch-Einrichtung (204) einer weiteren Netzwerkeinrichtung (200) mit einer ersten und zweiten Steuereinrichtung (202, 203);
wobei in einer jeweiligen weiteren Switch-Einrichtung (204) an einem Empfangsport (214) für die zweite Steuereinrichtung (203) der weiteren Switch-Einrichtung (204) empfangene Daten an einen Sendeport (209) für die erste Steuereinrichtung (202) der weiteren Switch-Einrichtung (204) weitergeleitet werden, und an einem Empfangsport (210) für die erste Steuereinrichtung (202) der weiteren Switch-Einrichtung (204) empfangene Daten an einen Sendeport (213) für die zweite Steuereinrichtung (203) der weiteren Switch-Einrichtung (204) weitergeleitet werden.

3. Verfahren nach Anspruch 1 oder 2, ferner umfassend: Vergleichen der ersten Daten (D1) mit den zweiten Daten (D2) in der ersten und/oder zweiten Steuereinrichtung (2, 3) zum Erzeugen eines Vergleichsergebnisses; und Passivieren der Netzwerkeinrichtung (1) in Abhängigkeit von dem Vergleichsergebnis.

4. Verfahren nach einem der Ansprüche 1 - 3, ferner umfassend: erneutes Senden der ersten und der zweiten Daten (D1, D2) über den ersten und den zweiten Kommunikationspfad (CB1, CB2, CB3, CR1, CR2, CR3).

5. Verfahren nach einem der Ansprüche 1 - 4, ferner umfassend: in einer weiteren Netzwerkeinrichtung (200) Empfangen der ersten Daten (D1) und der zweiten Daten (D2) an Eingansports (210, 214) für unterschiedliche Steuereinrichtungen (202, 203), und Vergleichen der empfangenen Daten.

6. Verfahren (1) nach einem der Ansprüche 1 - 5, ferner umfassend: Anzeigen einer Fehlermeldung, falls verglichene erste Daten (D1) und zweite Daten (D2) nicht durch die vorgegebene Kodierung miteinander verknüpft sind.

7. Verfahren (1) nach einem der Ansprüche 1 - 6,
**dadurch gekennzeichnet,**
**dass** das Kommunikationsnetzwerk (6) ein Ethernet-Netzwerk ist.

8. Computerprogrammprodukt, welches die Durchführung eines Verfahrens nach einem der Ansprüche 1 -7 auf einer oder mehrerer programmgesteuerter Einrichtungen (1, 100, 200, 300) veranlasst.

9. Datenträger mit einem gespeicherten Computerprogramm mit Befehlen, welche die Durchführung eines Verfahrens nach einem der Ansprüche 1 -7 auf einer oder mehrerer programmgesteuerter Einrichtungen (1, 100, 200, 300) veranlasst.

10. Netzwerkanordnung (101) mit mehreren Netzwerkeinrichtungen (1, 201, 301), welche an ein Kommunikationsnetzwerk (6) gekoppelt sind, wobei eine jeweilige Netzwerkeinrichtung (1) eine Switch-Einrichtung (4), eine erste und eine zweite Steuereinrichtung (2, 3), welche an die Switch-Einrichtung (4) gekoppelt sind, aufweist, und wobei die Switch-Einrichtung (4) für die erste und die zweite Steuereinrichtung (2, 3) jeweils einen Empfangsport (10, 14) und einen Sendeport (9, 13) zum Senden und Empfangen von Daten über das Kommunikationsnetzwerk (6) hat, und wobei die Netzwerkeinrichtungen (1, 100, 200, 300) eingerichtet sind, ein Verfahren nach einem der Ansprüche 1 - 7 durchzuführen.

11. Netzwerkanordnung (101) nach Anspruch 10,
**dadurch gekennzeichnet,**
**dass** die Netzwerkanordnung (101) Teil eines Fahrzeugs ist.

12. Netzwerkanordnung (101) nach Anspruch 10 oder 11, **dadurch gekennzeichnet,**
**dass** Netzwerkeinrichtungen (101) Sensoreinrichtungen oder Aktoreinrichtungen zum Betreiben eines Fahrzeugs sind.

13. Netzwerkanordnung (101) nach einem der Ansprüche 10 - 12,
**dadurch gekennzeichnet,**
**dass** mindestens eine Netzwerkeinrichtung (100) eine erste und zweite Switch-Einrichtung (4, 5) umfasst, wobei die erste Switch-Einrichtung (4) der ersten Steuereinrichtung (2) zugeordnet ist und die zweite Switch-Einrichtung (5) der zweiten Steuereinrichtung (3) zugeordnet ist, und wobei die Switch-Einrichtungen (4, 5) jeweils mindestens zwei Ports (7 - 18) umfassen und die Switch-Einrichtungen (4, 5) kommunikativ miteinander gekoppelt sind.

14. Netzwerkanordnung (150) nach einem der Ansprüche 10 - 13,
**dadurch gekennzeichnet, dass** mindestens zwei ringförmige Teil-Netzwerkanordnungen vorgesehen sind, wobei die Teil-Netzwerkanordnungen an mindestens zwei unterschiedlichen Stellen mit Hilfe von Switch-Einrichtungen miteinander gekoppelt sind.

15. Netzwerkanordnung (150) nach einem der Ansprüche 10 - 14,
**dadurch gekennzeichnet, dass** Einfach-Netzwerkeinrichtungen (400) mit jeweils einer Steuereinrichtung und einer Switch-Einrichtung in der Netzwerkanordnung vorgesehen sind.

16. Netzwerkanordnung (150) nach Anspruch 14 oder 15,
**dadurch gekennzeichnet, dass** Einfach-Netzwerkeinrichtungen (400) über Stichleitungen mit Hilfe von Switch-Einrichtungen (404) an die ringförmige Teil-Netzwerkanordnung gekoppelt sind.

17. Netzwerkanordnung (101) nach einem der Ansprüche 10 - 16,
**dadurch gekennzeichnet,**
**dass** die Netzwerkeinrichtungen als jeweils als einzelner FPGA, ASIC, IC Chip, oder fest verdrahteter Mikroschaltkreis ausgeführt sind.

## Claims

1. Method for operating a communication network (101) for network devices (1) that are coupled to the communication network (6), wherein a respective network device (1) comprises a switch device (4), a first and a second control device (2, 3), which are coupled to the switch device (4), and wherein the switch device (4) has a respective reception port (10, 14) and transmission port (9, 13) for the first and second control devices (2, 3) for the purpose of sending and receiving data via the communication network (6), wherein the method comprises:
production of first data (D1) by the first control device (2) and second data (D2) by the second control device (3), wherein the first data (D1) and the second data (D2) are linked to one another by a prescribed coding;
sending of the first data (D1) from the first control device (2) via the switch device (4) to the second control device (3) and sending of the second data (D2) from the second control device (3) via the switch device (4) to the first control device (2);
sending of the first data (D1) and the second data (D2) via a first communication path (CB1, CB2, CB3) from the transmission port (9) of the switch device (4) for the first control device (2) to the reception port (14) of the switch device (4) for the second control device (3);
sending of the first data (D1) and the second data (D2) via a second communication path (CR1, CR2, CR3) from the transmission port (13) of the switch device (4) for the second control device (3) to the reception port (10) of the switch device (4) for the first control device (2);
wherein the data on the first and second communication paths (CB1, CB2, CB3, CR1, CR2, CR3) pass through the same network devices (200, 300) in opposite directions.

2. Method according to Claim 1, also comprising:
sending of the first data (D1) and the second data (D2) via the transmission port (9) of the switch device (4) for the first control device (2) to the reception port (14) of the switch device (4) for the second control device (3) via at least one further switch device (204) of a further network device (200) having a first and a second control device (202, 203) ; and
sending of the first data (D1) and the second data (D2) via the transmission port (13) of the switch device (4) for the second control device (3) to the reception port (10) of the switch device (4) for the first control device (2) via at least one further switch device (204) of a further network device (200) having a first and a second control device (202, 203) ;
wherein data received in a respective further switch device (204) at a reception port (214) for the second control device (203) of the further switch device (204) are forwarded to a transmission port (209) for the first control device (202) of the further switch device (204), and data received at a reception port (210) for the first control device (202) of the further switch device (204) are forwarded to a transmission port (213) for the second control device (203) of the further switch device (204).

3. Method according to Claim 1 or 2, also comprising:
comparison of the first data (D1) with the second data (D2) in the first and/or second control device (2, 3) in order to produce a comparison result; and passivation of the network device (1) on the basis of the comparison result.

4. Method according to one of Claims 1-3, also comprising:
fresh sending of the first and second data (D1, D2) via the first and second communication paths (CB1, CB2, CB3, CR1, CR2, CR3) .

5. Method according to one of Claims 1-4, also comprising:
in a further network device (200), reception of the first data (D1) and the second data (D2) at input ports (210, 214) for different control devices (202, 203), and comparison of the received data.

6. Method (1) according to one of Claims 1-5, also comprising: display of an error message if compared first data (D1) and second data (D2) are not linked to one another by the prescribed coding.

7. Method (1) according to one of Claims 1-6,
**characterized**
**in that** the communication network (6) is an Ethernet network.

8. Computer program product that prompts the performance of a method according to one of Claims 1-7 on one or more program-controlled devices (1, 100, 200, 300).

9. Data storage medium having a stored computer program having commands that prompts the performance of a method according to one of Claims 1-7 on one or more program-controlled devices (1, 100, 200, 300).

10. Network arrangement (101) having a plurality of network devices (1, 201, 301) that are coupled to a communication network (6), wherein a respective network device (1) has a switch device (4), a first and a second control device (2, 3), which are coupled to the switch device (4), and wherein the switch device (4) has a respective reception port (10, 14) and transmission port (9, 13) for the first and second control devices (2, 3) for the purpose of sending and receiving data via the communication network (6), and wherein the network devices (1, 100, 200, 300) are set up to perform a method according to one of Claims 1 - 7.

11. Network arrangement (101) according to Claim 10,
**characterized**
**in that** the network arrangement (101) is part of a vehicle.

12. Network arrangement (101) according to Claim 10 or 11,
**characterized**
**in that** network devices (101) are sensor devices or actuator devices for operating a vehicle.

13. Network arrangement (101) according to one of Claims 10-12,
**characterized**
**in that** at least one network device (100) comprises a first and a second switch device (4, 5), wherein the first switch device (4) is associated with the first control device (2) and the second switch device (5) is associated with the second control device (3), and wherein the switch devices (4, 5) respectively comprise at least two ports (7-18) and the switch devices (4, 5) are communicatively coupled to one another.

14. Network arrangement (150) according to one of Claims 10 - 13,
**characterized in that** at least two ring-shaped network arrangement elements are provided, wherein the network arrangement elements are coupled to one another at at least two different locations by means of switch devices.

15. Network arrangement (150) according to one of Claims 10-14,
**characterized in that** simple network devices (400) having a respective control device and switch device are provided in the network arrangement.

16. Network arrangement (150) according to Claim 14 or 15,
**characterized in that** simple network devices (400) are coupled to the ring-shaped network arrangement element via spur lines by means of switch devices (404).

17. Network arrangement (101) according to one of Claims 10-16,
**characterized**
**in that** the network devices are each in the form of a single FPGA, ASIC, IC chip or hardwired microcircuit.

## Revendications

1. Procédé de fonctionnement d'un réseau de communication (101) pour des périphériques de réseau (1) couplés au réseau de communication (6), un périphérique de réseau respectif (1) comprenant un dispositif de commutation (4), un premier et un deuxième dispositif de commande (2, 3) couplés au dispositif de commutation (4), et le dispositif de commutation (4) ayant respectivement un port de réception (10, 14) et un port d'émission (9, 13) pour le premier et le deuxième dispositif de commande (2, 3) pour émettre et recevoir des données via le réseau de communication (6), le procédé incluant :
la génération de premières données (D1) par le premier dispositif de commande (2) et de deuxièmes données (D2) par le deuxième dispositif de commande (3), les premières données (D1) et les deuxièmes données (D2) étant associées entre elles par un codage prédéterminé ;
l'envoi des premières données (D1) du premier dispositif de commande (2) au deuxième dispositif de commande (3) via le dispositif de commutation (4) et l'envoi des deuxièmes données (D2) du deuxième dispositif de commande (3) au premier dispositif de commande (2) via le dispositif de commutation (4) ;
l'envoi des premières données (D1) et des deuxièmes données (D2), sur un premier chemin de communication (CB1, CB2, CB3), du port d'émission (9) du dispositif de commutation (4) pour le premier dispositif de commande (2) au port de réception (14) du dispositif de commutation (4) pour le deuxième dispositif de commande (3) ;
l'envoi des premières données (D1) et des deuxièmes données (D2), sur un deuxième chemin de communication (CR1, CR2, CR3), du port d'émission (13) du dispositif de commutation (4) pour le deuxième dispositif de commande (3) au port de réception (10) du dispositif de commutation (4) pour le premier dispositif de commande (2) ;
les données du premier et du deuxième chemin de communication (CB1, CB2, CB3, CR1, CR2, CR3) passant par les mêmes périphériques de réseau (200, 300) en sens contraire.

2. Procédé selon la revendication 1, comprenant en outre :
l'envoi des premières données (D1) et des deuxièmes données (D2), via le port d'émission (9) du dispositif de commutation (4) pour le premier dispositif de commande (2), au port de réception (14) du dispositif de commutation (4) pour le deuxième dispositif de commande (3) via au moins un autre dispositif de commutation (204) d'un autre périphérique de réseau (200) avec un premier et un deuxième dispositif de commande (202, 203) ; et
l'envoi des premières données (D1) et des deuxièmes données (D2) via le port d'émission (13) du dispositif de commutation (4) pour le deuxième dispositif de commande (3) au port de réception (10) du dispositif de commutation (4) pour le premier dispositif de commande (2) via au moins un autre dispositif de commutation (204) d'un autre périphérique de réseau (200) avec un premier et un deuxième dispositif de commande (202, 203) ;
des données reçues dans un autre dispositif de commutation respectif (204) au niveau d'un port de réception (214) pour le deuxième dispositif de commande (203) de l'autre dispositif de commutation (204) étant retransmises à un port d'émission (209) pour le premier dispositif de commande (202) de l'autre dispositif de commutation (204), et des données reçues au niveau d'un port de réception (210) pour le premier dispositif de commande (202) de l'autre dispositif de commutation (204) étant retransmises à un port d'émission (213) pour le deuxième dispositif de commande (203) de l'autre dispositif de commutation (204).

3. Procédé selon la revendication 1 ou 2, incluant en outre: la comparaison des premières données (D1) avec les deuxièmes données (D2) dans le premier et/ou le deuxième dispositif de commande (2, 3) pour générer un résultat de comparaison; et la passivation du périphérique de réseau (1) en fonction du résultat de comparaison.

4. Procédé selon l'une des revendications 1 à 3, incluant en outre: la nouvelle émission des premières et des deuxièmes données (D1, D2) sur le premier et le deuxième chemin de communication (CB1, CB2, CB3, CR1, CR2, CR3).

5. Procédé selon l'une des revendications 1 à 4, incluant en outre: la réception, dans un autre périphérique de réseau (200), des premières données (D1) et des deuxièmes données (D2) au niveau de ports d'entrée (210, 214) pour différents dispositifs de commande (202, 203), et la comparaison des données reçues.

6. Procédé (1) selon l'une des revendications 1 à 5, incluant en outre: l'affichage d'un message d'erreur si des premières données (D1) et des deuxièmes données (D2) comparées ne sont pas associées entre elles par le codage prédéterminé.

7. Procédé (1) selon l'une des revendications 1 à 6, **caractérisé en ce que** le réseau de communication (6) est un réseau Ethernet.

8. Produit de programme informatique qui fait exécuter un procédé selon l'une des revendications 1 à 7 sur un ou plusieurs périphériques commandés par programme (1, 100, 200, 300).

9. Support de données avec un programme informatique stocké contenant des commandes qui font exécuter un procédé selon l'une des revendications 1 à 7 sur un ou plusieurs périphériques commandés par programme (1, 100, 200, 300).

10. Agencement de réseau (101) comportant plusieurs périphériques de réseau (1, 201, 301) couplés à un réseau de communication (6), un périphérique de réseau respectif (1) comportant un dispositif de commutation (4), un premier et un deuxième dispositif de commande (2, 3) couplés au dispositif de commutation (4), et le dispositif de commutation (4) ayant respectivement un port de réception (10, 14) et un port d'émission (9, 13) pour le premier et le deuxième dispositif de commande (2, 3) pour émettre et recevoir des données via le réseau de communication (6), et les périphériques de réseau (1, 100, 200, 300) étant configurés pour exécuter un procédé selon l'une des revendications 1 à 7.

11. Agencement de réseau (101) selon la revendication 10, **caractérisé en ce que** l'agencement de réseau (101) est une partie d'un véhicule.

12. Agencement de réseau (101) selon la revendication 10 ou 11, **caractérisé en ce que** des périphériques de réseau (101) sont des dispositifs capteurs ou des dispositifs actionneurs pour faire fonctionner un véhicule.

13. Agencement de réseau (101) selon l'une des revendications 10 à 12, **caractérisé en ce qu'**au moins un périphérique de réseau (100) comprend un premier et un deuxième dispositif de commutation (4, 5), le premier dispositif de commutation (4) étant associé au premier dispositif de commande (2) et le deuxième dispositif de commutation (5) étant associé au deuxième dispositif de commande (3), et les dispositifs de commutation (4, 5) comprenant respectivement au moins deux ports (7 - 18) et les dispositifs de commutation (4, 5) étant couplés communicativement entre eux.

14. Agencement de réseau (150) selon l'une des revendications 10 à 13, **caractérisé en ce qu'**au moins deux agencements de réseaux partiels annulaires sont prévus, les agencements de réseaux partiels étant couplés entre eux en au moins deux endroits différents à l'aide de dispositifs de commutation.

15. Agencement de réseau (150) selon l'une des revendications 10 à 14, **caractérisé en ce que** sont prévus des périphériques de réseau simples (400) avec respectivement un dispositif de commande et un dispositif de commutation dans l'agencement de réseau.

16. Agencement de réseau (150) selon la revendication 14 ou 15, **caractérisé en ce que** des périphériques de réseau simples (400) sont couplés à l'agencement de réseau partiel annulaire via des lignes de dérivation à l'aide de dispositifs de commutation (404).

17. Agencement de réseau (101) selon l'une des revendications 10 à 16, **caractérisé en ce que** les périphériques de réseau sont respectivement réalisés en tant que FPGA, ASIC, IC Chip ou microcircuit câblé individuels.
